(19)

Europäisches
Patentamt
European
Patent Office
Office européen
des brevets

(11)  EP 3 416 036 A1

(12) **EUROPEAN PATENT APPLICATION**
published in accordance with Art. 153(4) EPC

(43) Date of publication:
**19.12.2018 Bulletin 2018/51**

(21) Application number: **16891951.2**

(22) Date of filing: **29.02.2016**

(51) Int Cl.:
**G06F 3/0487** (2013.01)     **H04M 1/725** (2006.01)

(86) International application number:
**PCT/CN2016/074865**

(87) International publication number:
**WO 2017/147758 (08.09.2017 Gazette 2017/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Huawei Technologies Co., Ltd.
Longgang District
Shenzhen, Guangdong 518129 (CN)**

(72) Inventors:
• **JIANG, Yuwei
  Shenzhen
  Guangdong 518129 (CN)**
• **XIONG, Yuanfeng
  Shenzhen
  Guangdong 518129 (CN)**

(74) Representative: **Isarpatent
Patent- und Rechtsanwälte Behnisch Barth
Charles
Hassa Peckmann & Partner mbB
Friedrichstrasse 31
80801 München (DE)**

(54) **PAGE SLIDING METHOD AND DEVICE, AND USER TERMINAL**

(57)     A page sliding method and apparatus, and user equipment are provided, and the method includes: when receiving a pressing signal that is entered for a display page, obtaining a pressing pressure value of the pressing signal, and a pressed position or a change trend of the pressing pressure value; determining a page sliding speed according to the pressing pressure value, and determining a page sliding direction according to the pressed position or the change trend of the pressing pressure value; controlling the display page to slide at the page sliding speed along the page sliding direction; when receiving a sliding signal that is entered for a display page, obtaining a touch pressure value, a sliding direction, and a sliding speed of the sliding signal; determining a page sliding speed according to the touch pressure value and the sliding speed, and determining a page sliding direction according to the sliding direction; and controlling the display page to slide at the page sliding speed along the page sliding direction. In embodiments of the present invention, operation steps of a user can be reduced, and flexibility and intelligence of a user terminal can be improved.

| | |
|---|---|
| When receiving a pressing signal that is entered for a display page, obtain a pressing pressure value and pressing characteristic information of the pressing signal, where the pressing characteristic information includes a change trend of the pressing pressure value | 101 |
| Determine a page sliding speed according to the pressing pressure value | 102 |
| Determine a page sliding direction according to the change trend of the pressing pressure value | 103 |
| Control the display page to slide at the page sliding speed along the page sliding direction | 104 |
| If it is detected that the pressing signal is interrupted, control the display page to slide by means of deceleration at a second preset sliding speed along the page sliding direction | 105 |

FIG. 2

# Description

## TECHNICAL FIELD

The present invention relates to the field of touch sensing technologies, and in particular, to a page sliding method and apparatus, and a user terminal.

## BACKGROUND

With rapid development and increasing popularity of user terminals such as a mobile phone and a tablet computer, the user terminals have become indispensable communications tools in people's life. A user can freely obtain information by using the user terminal, for example, browsing news or a web page, reading an e-book, and browsing a historical chat record.

Due to a fixed size of a display of a user terminal, the user terminal displays a fixed and limited amount of information for a user each time. If the user wants to obtain more information, the user needs to slide a screen of the display of the user terminal to scroll or update content of a current display page. For a page with relatively much content, the user needs to keep sliding the screen to browse all contents on the page. It can be learned that, the operation is relatively cumbersome for the user in an existing page sliding process; and the user terminal is inflexible and not intelligent when the page slides according to a slide operation entered by the user.

## SUMMARY

Embodiments of the present invention provide a page sliding method and apparatus, and a user terminal, to reduce operation steps of a user, and improve flexibility and intelligence of a user terminal.

A first aspect of the embodiments of the present invention provides a page sliding method, including:

> when receiving a pressing signal that is entered for a display page, obtaining a pressing pressure value and pressing characteristic information of the pressing signal, where the pressing characteristic information includes a pressed position or a change trend of the pressing pressure value;
> determining a page sliding speed according to the pressing pressure value, and determining a page sliding direction according to the pressed position or the change trend of the pressing pressure value; and
> controlling the display page to slide at the page sliding speed along the page sliding direction.

According to the first aspect of the embodiments of the present invention, the page sliding speed and the page sliding direction are determined according to the pressing pressure value and the pressing characteristic information of the pressing signal, and it may be implemented that page sliding is controlled by means of pressing without entering a slide operation by a user, so that flexibility, intelligence, and adaptability of a user terminal are improved.

Based on the first aspect of the embodiments of the present invention, in a first possible implementation of the first aspect of the embodiments of the present invention, the page sliding speed is calculated according to a formula and the pressing pressure value. For ease of distinguishing between the pressing signal and another pressing signal, whether the pressing pressure value is greater than a first preset pressure threshold is detected. If the pressing pressure value is greater than the first preset pressure threshold, the page sliding speed is calculated according to the pressing pressure value and a first calculation formula, where

the first calculation formula is: $v = v_0 \times f(P-P_0)$, where $v$ is the page sliding speed, $v_0$ is a first preset page sliding speed, P is the pressing pressure value, $P_0$ is the first preset pressure threshold, and $f(x)$ is a pressing pressure function.

Based on the first aspect of the embodiments of the present invention or the first possible implementation of the first aspect, in a second possible implementation of the first aspect of the embodiments of the present invention, the determining a page sliding direction according to the pressed position includes:

> if the pressed position is located in a first touch area, determining the page sliding direction as a first preset direction; and
> if the pressed position is located in a second touch area, determining the page sliding direction as a second preset direction, where
> the first preset direction is opposite to the second preset direction, that is, the first preset direction is upward, and the second preset direction is downward.

The second possible implementation of the first aspect of the embodiments of the present invention is applicable to a case in which the first touch area and the second touch area are provided, the pressed position is determined by means of detection, and then the page sliding direction is determined.

Based on the first aspect of the embodiments of the present invention or the first possible implementation of the first aspect, in a third possible implementation of the first aspect of the embodiments of the present invention, the determining a page sliding direction according to the change trend of the pressing pressure value includes:

> if the change trend of the pressing pressure value is the same as a first preset trend, determining the page sliding direction as a first preset direction; and
> if the change trend of the pressing pressure value is the same as a second preset trend, determining the page sliding direction as a second preset direction, where
the first preset direction is opposite to the second preset direction.

The third possible implementation of the first aspect of the embodiments of the present invention is applicable to a case in which the pressing pressure value changes in a preset time period, or is applicable to a case in which neither the first touch area nor the second touch area is provided.

Based on the first to the third possible implementations of the first aspect of the embodiments of the present invention, in a fourth possible implementation of the first aspect of the embodiments of the present invention, if it is detected that the pressing signal is interrupted, the display page is controlled to slide by means of deceleration at a second preset sliding speed along the page sliding direction.

In the fourth possible implementation of the first aspect of the embodiments of the present invention, after the pressing signal is interrupted, sliding does not immediately stop, but sliding is performed by means of deceleration at the second preset sliding speed, so that user experience is improved.

A second aspect of the embodiments of the present invention provides another page sliding method, including:

when receiving a sliding signal that is entered for a display page, obtaining a touch pressure value and sliding characteristic information of the sliding signal, where the sliding characteristic information includes a sliding direction and a sliding speed;
determining a page sliding speed according to the touch pressure value and the sliding speed, and determining a page sliding direction according to the sliding direction; and
controlling the display page to slide at the page sliding speed along the page sliding direction.

According to the second aspect of the embodiments of the present invention, the page sliding speed and the page sliding direction are determined according to the touch pressure value, the sliding speed, and the sliding direction of the sliding signal without repeatedly entering a slide operation by a user, and the sliding speed is determined by combining the touch pressure value of the sliding signal with the sliding speed, so that operation steps of a user are reduced, and flexibility and intelligence of a user terminal are improved.

Based on the second aspect of the embodiments of the present invention, in a first possible implementation of the second aspect of the embodiments of the present invention, the page sliding speed is calculated according to the touch pressure value, the sliding speed, and a second calculation formula, where
the second calculation formula is: $v = v_0 \times f(P, P_0)$, where $v$ is the page sliding speed, $v_0$ is the sliding speed, P is the touch pressure value, $P_0$ is a second preset pressure threshold, and $f(x,y)$ is a sliding pressure function.

In the first possible implementation of the second aspect of the embodiments of the present invention, the page sliding speed is calculated by using the formula and according to the touch pressure value and the sliding speed, and factors that affect the page sliding speed increase, so that the page sliding speed is not only controlled by the sliding speed entered by the user.

The page sliding direction is a sliding direction of the sliding signal.

Based on the second aspect of the embodiments of the present invention or the first possible implementation of the first aspect, in a second possible implementation of the second aspect of the embodiments of the present invention, if it is detected that the sliding signal is interrupted, the display page is controlled to slide by means of deceleration at a second preset sliding speed along the page sliding direction.

In the second possible implementation of the second aspect of the embodiments of the present invention, after the sliding signal is interrupted, sliding does not immediately stop, but sliding is performed by means of deceleration at the second preset sliding speed, so that user experience is improved.

A third aspect of the embodiments of the present invention provides a page sliding apparatus, including:

an information obtaining unit, configured to: when receiving a pressing signal that is entered for a display page, obtain a pressing pressure value and pressing characteristic information of the pressing signal, where the pressing characteristic information includes a pressed position or a change trend of the pressing pressure value;
a speed determining unit, configured to determine a page sliding speed according to the pressing pressure value;
a direction determining unit, configured to determine a page sliding direction according to the pressed position or the change trend of the pressing pressure value; and
a sliding control unit, configured to control the display page to slide at the page sliding speed along the page sliding direction.

The page sliding apparatus provided in the third aspect of the embodiments of the present invention is configured to implement the page sliding method provided in the first aspect of the embodiments of the present invention. For a specific implementation process, refer to the specific description of the first aspect, and details are not described herein again.

A fourth aspect of the embodiments of the present invention provides another page sliding apparatus, including:

an information obtaining unit, configured to: when receiving a sliding signal that is entered for a display page, obtain a touch pressure value and sliding characteristic information of the sliding signal, where the sliding characteristic information includes a sliding direction and a sliding speed;
a speed determining unit, configured to determine a page sliding speed according to the touch pressure value and the sliding speed;
a direction determining unit, configured to determine a page sliding direction according to the sliding direction; and
a sliding control unit, configured to control the display page to slide at the page sliding speed along the page sliding direction.

The page sliding apparatus provided in the fourth aspect of the embodiments of the present invention is configured to implement the page sliding method provided in the second aspect of the embodiments of the present invention. For a specific implementation process, refer to the specific description of the second aspect, and details are not described herein again.

A fifth aspect of the embodiments of the present invention provides a user terminal, including the page sliding apparatus provided in the third aspect of the embodiments of the present invention and the page sliding apparatus provided in the fourth aspect.

In the embodiments of the present invention, the page sliding speed and the page sliding direction are determined according to different touch signals; if the touch signal is the pressing signal, the page sliding speed and the page sliding direction are determined according to the pressing pressure value of the pressing signal, and the page sliding direction is determined according to the pressed position of the pressing signal or the change trend of the pressing pressure value; or if the touch signal is the sliding signal, the page sliding speed is determined according to the touch pressure value of the sliding signal and the sliding speed, and the page sliding direction is determined according to the sliding direction, so that operation steps of a user can be reduced, and flexibility and intelligence of a user terminal can be improved.

**BRIEF DESCRIPTION OF DRAWINGS**

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic structural diagram of hardware that implements a user terminal according to an embodiment of the present invention;
FIG. 2 is a schematic flowchart of a page sliding method according to Embodiment 1 of the present invention;
FIG. 3 is a schematic flowchart of a page sliding method according to Embodiment 2 of the present invention;
FIG. 4 is a display interface diagram of setting a first preset pressure threshold according to an embodiment of the present invention;
FIG. 5 is a schematic interface diagram of a display page according to Embodiment 2 of the present invention;
FIG. 6 is a schematic flowchart of a page sliding method according to Embodiment 3 of the present invention;
FIG. 7 is a schematic interface diagram of a display page according to Embodiment 3 of the present invention;
FIG. 8 is a schematic structural diagram of a page sliding apparatus according to an embodiment of the present invention; and
FIG. 9 is a schematic structural diagram of a page sliding apparatus according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

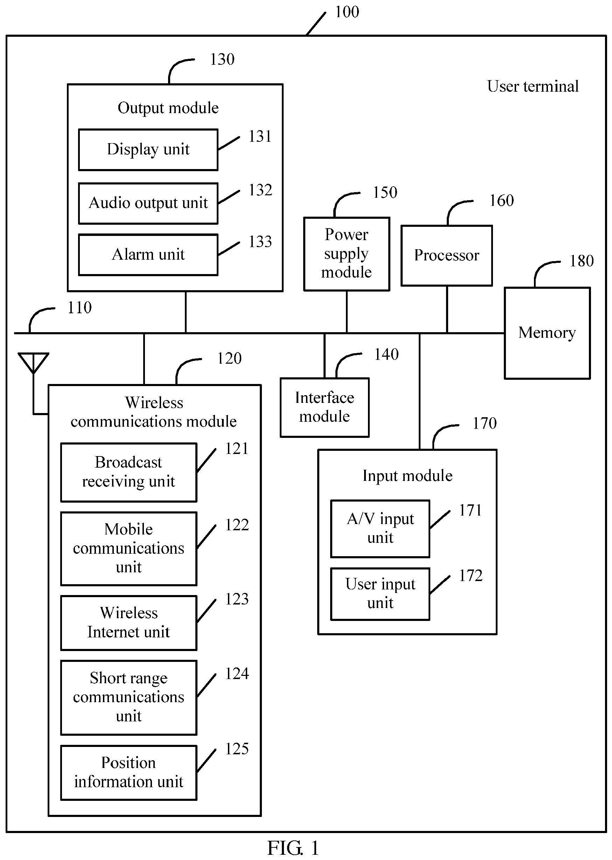

Referring to FIG. 1, FIG. 1 is a schematic structural diagram of hardware that implements a user terminal according to an embodiment of the present invention. The user terminal 100 may include a communications bus 110, a wireless communications module 120, an output module 130, an interface module 140, a power supply module 150, a processor 160, an input module 170, a memory 180, and the like. FIG. 1 shows the user terminal that has various types of components. However, it should be understood that all the shown components are not required to implement, instead more or fewer components may be alternatively implemented. The communications bus 110 is configured to implement connection and communication between these components.

The wireless communications module 120 usually includes one or more components that are configured to implement wireless communication between the user terminal 100 and a wireless communications system or network. As shown in FIG. 1, the wireless communications module 120 includes a broadcast receiving unit 121, a mobile communications unit 122, a wireless Internet unit 123, a short range communications unit 124, a position information unit 125, and the like. The broadcast receiving unit 121 receives a broadcast signal and/or broadcast-related information by using a broadcast channel from an external broadcast management server. The broadcast channel may include a satellite channel and/or a terrestrial channel. The broadcast signal may include but is not limited to a television broadcast signal, a radio broadcast signal, a data broadcast signal, and the like. The mobile communications unit 122 is configured to send a radio signal to a base station (for example, an access point, a network node, or the like), an external terminal, and a server for receiving the radio signal. The radio signal may include a voice call signal, a video call signal, or another data. The wireless Internet module 123 is configured to implement that the user terminal accesses a wireless Internet by using a wireless Internet access technology. The short range communications unit 124 is configured to support short range communication such as Bluetooth communication and near field communication. The position information module 125 is configured to check or obtain position information of the user terminal.

The output module 130 is configured to output data such as text, audio, and a video, and includes a display unit 131, an audio output unit 132, an alarm unit 133, and the like. The display unit 131 is configured to display information processed by the user terminal 100 or the processor 160. The display unit 131 includes a user interface, a graphical user interface, or the like, and displays various kinds of information to a user. The audio output unit 132 is configured to: when the user terminal is in a mode such as a call signal receiving mode, a call mode, a record mode, a speech recognition mode, or a broadcast receiving mode, convert audio data received by the wireless communications module 120 or stored in the memory 180 into an audio signal and output the audio signal as a sound. The alarm unit 133 is configured to notify the user terminal 100 of occurrence of some events, for example, occurrence of events such as call receiving, message receiving, and touch input.

The interface module 140 is configured to implement connection between the user terminal 100 and an external apparatus, and may include a wired or wireless headset port, an external power supply port, a wired or wireless data port, a memory card port, an audio input/output port, or the like.

The power supply module 150 is configured to provide a required quantity of electricity for each component of the user terminal 100.

The processor 160 is configured to control various operations of the user terminal and implementation of various functions.

The input module 170 is configured to receive various operations of the user and an audio or video signal, and includes an A/V input unit 171, a user input unit 172, and the like. The A/V input unit 171 is configured to receive an audio or video signal, and may include a camera and a microphone. Image information collected by the camera is displayed by the display unit 131 under control of the processor 160. The user input unit 172 is configured to: receive various operations entered by the user, for example, a press operation and a slide operation, identify these slide operations, generate a corresponding command, and transmit the command to the processor 160, and then the processor 160 controls execution of a corresponding operation or implementation of a corresponding function. In this embodiment of the present invention, the user input unit 172 is configured to receive a touch signal entered by the user for a sliding display interface that is displayed by the display unit 131, and the touch signal is a touch operation, that is, a press operation or a slide operation. The user input unit 172 includes various sensors such as pressure sensor.

The memory 180 stores program code that is used by the processor 160 to perform a processing or control operation, or temporarily stores some data such as an address book, an image, or a video. The memory 180 may be a high-speed RAM memory, or may be a non-volatile memory (non-volatile memory), such as at least one magnetic disk memory.

A page sliding method and apparatus, and the user terminal that are provided in the embodiments of the present invention may be applied to a scenario in which a display page is controlled to slide, and the display page may include but is not limited to a page such as a news web page, an address book page, a historical chat record page, an application icon list page, a date selection page, or an e-book page. The user terminal in the embodiments of the present invention may include but is not limited to an electronic device with a touch display, such as a mobile phone, a PAD (tablet computer), or an intelligent wearable device.

The page sliding method provided in the embodiments of the present invention is described below in detail with reference to FIG. 1 to FIG. 7.

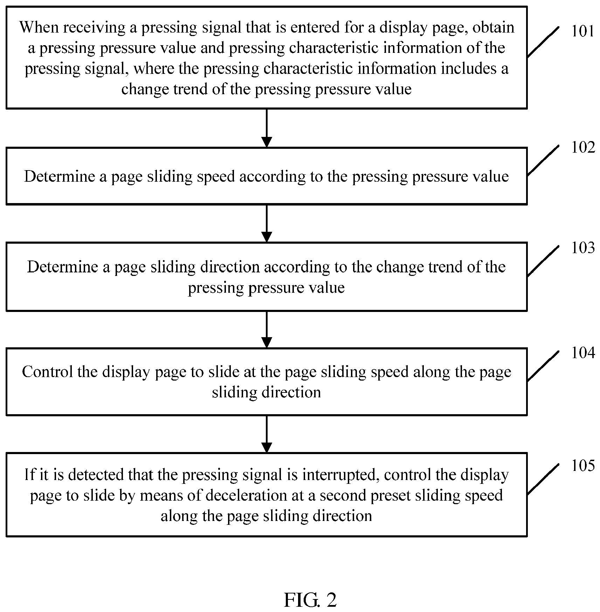

Referring to FIG. 2, FIG. 2 is a schematic flowchart of a page sliding method according to Embodiment 1 of the present invention. With reference to the user terminal shown in FIG. 1, the memory 180 stores a set of program code, and the processor 160 invokes the program code stored in the memory 180, to execute the page sliding method that may include the following step 101 to step 105.

101. When receiving a pressing signal that is entered for a display page, obtain a pressing pressure value and pressing characteristic information of the pressing signal, where the pressing characteristic information includes a change trend of the pressing pressure value.

Specifically, when the display unit 131 is in a display state, the user input unit 172 may receive a touch signal that is entered by a user for the display page. The display page may include but is not limited to a page that may slide, such as a news web page, an address book page, a historical chat record page, an application icon list page, a date selection page, or an e-book page. It may be understood that the display unit 131 cannot display all content of the display page to the user at a time. Therefore, the display unit 131 successively displays all the content of the display page to the user in a scrolling manner, so that the user can browse and obtain complete information. If the content of the display interface may be displayed to the user at a time, the user does not need to control sliding of the display page. Generally, the memory 180 stores code that is used by the display unit 131 to implement scrolling display. An Android system is used as an example, and the code is scroller Scroller code and velocity tracker Velocity Tracker code. The Scroller is used for recording a sliding track and driving sliding of the page, and the Velocity Tracker is used for tracking a velocity of a slide operation entered by the user. Then, the processor 160 invokes the two pieces of code to control the display page to slide according to the velocity tracked by the Velocity Tracker. In the prior art, sliding of the display page is driven only by the slide operation entered by the user, and therefore, the Velocity Tracker tracks only the velocity of the slide operation. In this embodiment of the present invention, the sliding of the display page may be driven by not only the slide operation but also another touch operation, for example, a press operation. Therefore, in this embodiment of the present invention, the Velocity Tracker not only may track the velocity, but further has another function, for example, calculating the velocity.

In a possible implementation, when receiving the touch signal that is entered by the user for the display page of the display unit 131, the user input unit 172 identifies the touch signal, and determines whether the touch signal is a pressing signal or a sliding signal. Optionally, the user input unit 172 performs identification according to a position change relationship of the touch signal, and if a position of the touch signal does not change, the touch signal is the pressing signal; or if a position of the touch signal changes, the touch signal is the sliding signal. In another possible implementation, when receiving the touch signal that is entered by the user for the display page of the display unit 131, the user input unit 172 transmits the touch signal to the processor 160, and when receiving the touch signal, the processor 160 identifies the touch signal to determine whether the touch signal is a pressing signal or a sliding signal. Optionally, the processor 160 obtains a position change relationship of the touch signal by using the user input unit 172, and if a position of the touch signal does not change, the touch signal is the pressing signal; or if a position of the touch signal changes, the touch signal is the sliding signal.

When the touch signal is the pressing signal, the processor 160 obtains the pressing pressure value and the pressing characteristic information of the pressing signal by using the user input unit 172, and the pressing characteristic information includes the change trend of the pressing pressure value.

In this embodiment of the present invention, a pressure touch technology is used to obtain the pressing pressure value of the pressing signal. Currently, a multi-touch technology is used by most of user terminals. The multi-touch technology is only a two-dimensional human-machine interaction. A shear force is determined according to the multi-touch technology, that is, a force that is exerted paralleling to a plane of the display unit 131. However, the pressure touch technology is a three-dimensional human-machine interaction. Not only the sheer force can be determined, but also a perpendicular force can be determined. The perpendicular force is a force that is entered by the user to the user input unit 172 and that is perpendicular to the plane of the display unit 131. The processor 160 may perform a corresponding operation by using the perpendicular force determined by the pressure touch technology, for example, an operation such as weighing. The pressure touch technology is described by using force touch Force Touch as an example. Force Touch is a touch sensing technology. By using Force Touch, the user may sense force of light pressure and hard pressure, and call different corresponding functions. In Force Touch, four pressure touch sensors are disposed at four corners of a touch panel of the user terminal, and different force that is pressed by a finger or a touch control on the touch panel is sensed by the four pressure touch sensors to perform positioning and measure an entered pressure value. In this embodiment of the present invention, the pressing pressure value may be a three-dimensional pressure value measured by using the pressure touch technology, or may be the perpendicular pressure value measured by using the pressure touch technology. Currently, the user terminal in the market uses Force Touch to implement relatively limited functions, for example, basic functions such as navigation and weighing, and does not use Force Touch to implement a page sliding function.

102. Determine a page sliding speed according to the pressing pressure value.

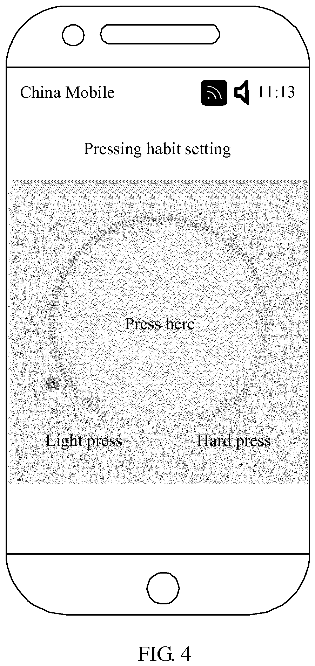

Specifically, the processor 160 detects the pressing pressure value obtained by the user input unit 172, to detect whether the pressing pressure value is greater than a first preset pressure threshold, and then determines a relationship between the pressing pressure value and the first preset pressure threshold. The first preset pressure threshold is a pressure value set by the user in the user terminal, and is used for triggering sliding of the display page. Referring to FIG. 4, FIG. 4 is a display interface diagram of setting the first preset pressure threshold according to an embodiment of the present invention. It should be noted that a display interface of a mobile phone is only used as an example for description in FIG. 4. Actually, the display interface of setting the first preset pressure threshold is set by a manufacturer of the user terminal, and is not limited herein. Identifiers on the top of FIG. 4, for example, an operator identifier, an electricity level identifier, and time are not limited in this embodiment of the present invention, and are determined according to a specific situation. When the user enters a press operation in "press here" in FIG. 4, the processor 160 measures a pressure value of the press operation, controls the display unit 131 to display the corresponding pressure value in a dial of the display interface, and simultaneously stores the pressure value as the first preset pressure threshold. The first preset pressure threshold is used for distinguishing between a pressing signal that triggers sliding of the display page and another pressing signal.

If the pressing pressure value is greater than the first preset pressure threshold, it may be understood that the pressing signal can trigger sliding of the display page, and in this case, the processor 160 calculates the page sliding speed according to a first calculation formula and the pressing pressure value. The first calculation formula is as follows:

$$v = v_0 \times f(P - P_0),$$

where

$v$ is the page sliding speed, that is, a required page sliding speed; $v_0$ is a first preset page sliding speed, and is a sliding speed preset by a system of the user terminal, and a specific value is not limited herein; P is the pressing pressure value; $P_0$ is the first preset pressure threshold, that is, a pressure value that triggers sliding of the display page; and $f(x)$ is a pressing pressure function, is set by a manufacturer of the user terminal, and is not limited herein. It should be noted that if the pressing pressure value changes, the page sliding speed also changes. In this embodiment of the present invention, the page sliding speed is determined mainly by the pressing pressure value, and a greater pressing pressure value leads to a faster page sliding speed. In this case, although sliding of the display page is triggered and the page sliding speed is obtained by means of calculation, a page sliding direction is not determined. Therefore, the display page does not slide in this case.

103. Determine a page sliding direction according to the change trend of the pressing pressure value.

Specifically, if the pressing pressure value changes in a preset time period, the pressing characteristic information includes the change trend of the pressing pressure value, and the change trend of the pressing pressure value is a change trend in the preset time period. If the change trend of the pressing pressure value is the same as a first preset trend, the page sliding direction is determined as a first preset direction. For example, if the first preset trend is gradually decreasing, and the change trend of the pressure value is also gradually decreasing, the first preset direction is upward or forward or leftward.

If the change trend of the pressing pressure value is the same as a second preset trend, the page sliding direction is determined as a second preset direction. For example, if the second preset trend is gradually increasing, and the change trend of the pressing pressure value is also gradually increasing, the second preset direction is downward or backward or rightward. It should be noted that the first preset direction is opposite to the second preset direction, but specifically whether gradually increasing is corresponding to upward or downward is not limited herein.

104. Control the display page to slide at the page sliding speed along the page sliding direction.

Specifically, after determining the page sliding speed and the page sliding direction, the processor 160 controls the display page to slide at the page sliding speed along the page sliding direction, so as to implement sliding of the display page, thereby facilitating the user in browsing content of the display page. In this embodiment of the present invention, the user needs to enter only the press operation, and when the pressing pressure value is greater than the first preset pressure threshold, may control the user terminal to implement sliding of the sliding display interface, so that operation steps of the user are reduced, and user experience is improved.

Optionally, in a process of sliding the display page, if the user input unit 172 receives a slide operation that is entered by the user, the processor 160 preferentially identifies the slide operation, obtains a sliding speed of the slide operation, and performs fine adjustment on the sliding speed according to the pressing pressure value.

105. If it is detected that the pressing signal is interrupted, control the display page to slide by means of deceleration at a second preset sliding speed along the page sliding direction.

Specifically, in the process of sliding the display page, the user input unit 172 detects whether the pressing signal is interrupted, that is, detects whether a finger of the user or a touch control leaves the display unit 131. Alternatively, by using the pressure touch technology, the processor 160 detects whether the pressing signal is interrupted, that is, detects whether the pressing pressure value of the pressing signal changes to zero. If the user input unit 172 detects that the pressing signal is interrupted or the processor 160 detects that the pressing signal is interrupted, the processor 160 controls the display page to slide by means of deceleration at the second preset sliding speed. The second preset sliding speed is used for controlling the display page to decelerate, and is determined by a system of the user terminal. A specific value is set by a manufacturer of the user terminal, and is not limited herein.

In this embodiment of the present invention, when the pressing signal that is entered for the sliding display interface is received, the pressing pressure value and the pressing characteristic information of the pressing signal are obtained, where the pressing characteristic information includes the change trend of the pressing pressure value; the page sliding speed is determined according to the pressing pressure value; the page sliding direction is determined according to the change trend of the pressing pressure value; and the display page is controlled to slide at the page sliding speed along the page sliding direction, so as to control sliding of the display page according to the pressing pressure value of the pressing signal and the change trend of the pressing pressure value. The user does not need to enter a slide operation, and needs only a press operation, so that operation steps of the user are reduced, and intelligence of the user terminal is improved.

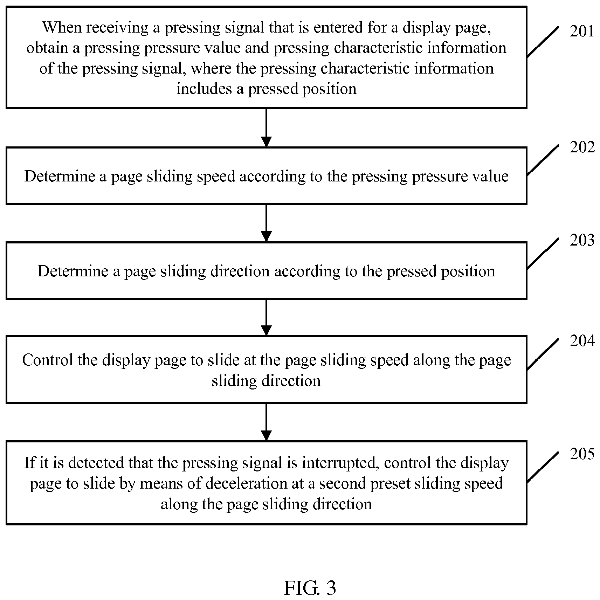

Referring to FIG. 3, FIG. 3 is a schematic flowchart of a page sliding method according to Embodiment 3 of the present invention. The page sliding method that is provided in Embodiment 2 of the present invention and in which the touch signal is a sliding signal is described in detail. With reference to the user terminal shown in FIG. 1, the memory 180 stores a set of program code, and the processor 160 invokes the program code stored in the memory 180, to execute the page sliding method that may include the following step 201 to step 205.

201. When receiving a pressing signal that is entered for a display page, obtain a pressing pressure value and pressing characteristic information of the pressing signal, where the pressing characteristic information includes a pressed position.

Specifically, when the user input unit 172 receives the pressing signal that is entered for the display page, the processor 160 obtains the pressing pressure value and the pressing characteristic information of the pressing signal by using the user input unit 172, where the pressing characteristic information includes the pressed position.

202. Determine a page sliding speed according to the pressing pressure value.

Specifically, the processor 160 detects the pressing pressure value obtained by the user input unit 172, to detect whether the pressing pressure value is greater than a first preset pressure threshold, and then determines a relationship between the pressing pressure value and the first preset pressure threshold. The first preset pressure threshold is a pressure value set by the user in the user terminal, and is used for triggering sliding of the display page. Referring to FIG. 4, FIG. 4 is a display interface diagram of setting the first preset pressure threshold according to an embodiment of the present invention. It should be noted that a display interface of a mobile phone is only used as an example for description in FIG. 4. Actually, the display interface of setting the first preset pressure threshold is set by a manufacturer of the user terminal, and is not limited herein. Identifiers on the top of FIG. 4, for example, an operator identifier, an electricity level identifier, and time are not limited in this embodiment of the present invention, and are determined according to a specific situation. When the user enters a press operation in "press here" in FIG. 4, the processor 160 measures a pressure value of the press operation, controls the display unit 131 to display the corresponding pressure value in a dial of the display interface, and simultaneously stores the pressure value as the first preset pressure threshold. The first preset pressure threshold is used for distinguishing between a pressing signal that triggers sliding of the display page and another pressing signal.

If the pressing pressure value is greater than the first preset pressure threshold, it may be understood that the pressing signal can trigger sliding of the display page, and in this case, the processor 160 calculates the page sliding speed according to a first calculation formula and the pressing pressure value. The first calculation formula is as follows:

$$v = v_0 \times f(P - P_0),$$

where
$v$ is the page sliding speed, that is, a required page sliding speed; $v_0$ is a first preset page sliding speed, and is a sliding speed preset by a system of the user terminal, and a specific value is not limited herein; P is the pressing pressure value; $P_0$ is the first preset pressure threshold, that is, a pressure value that triggers sliding of the display page; and $f(x)$ is a pressing pressure function, is set by a manufacturer of the user terminal, and is not limited herein. It should be noted that if the pressing pressure value changes, the page sliding speed also changes. In this embodiment of the present invention, the page sliding speed is determined mainly by the pressing pressure value, and a greater pressing pressure value leads to a faster page sliding speed. In this case, although sliding of the display page is triggered and the page sliding speed is obtained by means of calculation, a page sliding direction is not determined. Therefore, the display page does not slide in this case.

203. Determine a page sliding direction according to the pressed position.

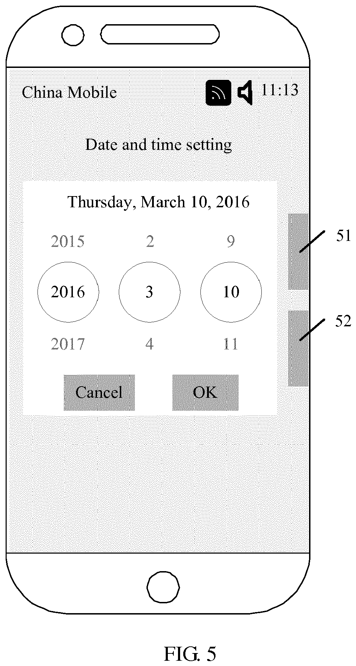

Specifically, the user input unit 172 determines the page sliding direction according to the obtained pressed position. If the pressed position is located in a first touch area, the page sliding direction is determined as a first preset direction. Referring to FIG. 5, FIG. 5 is a schematic interface diagram of a display page according to Embodiment 2 of the present invention. It should be noted that a display page of selecting a date is used an example for description in FIG. 5, another display page and the display page in FIG. 5 differ only in display content, and the page sliding direction is determined in a similar manner. FIG. 5 includes two gray rectangular areas 51 and 52, where 51 is the first touch area, and 52 is a second touch area. The first touch area and the second touch area are located at an edge of the display unit 131. As shown in FIG. 5, the first touch area and the second touch area are located at a right edge of FIG. 5. A relative position relationship between the touch area and the display unit 131 is not limited in this embodiment of the present invention. It should be noted that a position of the first touch area and the second touch area is not limited to the position shown in FIG. 5, and may be located at a right edge in a landscape mode. Optionally, when the user input unit 172 does not receive the pressing signal, the first touch area and the second touch area are not displayed in a current display interface. When the pressing pressure value is greater than the first preset pressure threshold, and the touch position is located in the first touch area or the second touch area, the first touch area and the second touch area are displayed in the current display interface. Optionally, neither the first touch area nor the second touch area is displayed in the current display interface. When the pressed position is located in the first touch area, the processor 160 determines the page sliding direction as the first preset direction, that is, upward or forward or leftward, pointing from the pressed position to a direction of the top of a display of the user terminal, or pointing from the pressed position to the left of a user who holds the user terminal.

When the pressed position is located in the second touch area, that is, in 52 in FIG. 5, the processor 160 determines the page sliding direction as the second preset direction, that is, downward or backward or rightward, pointing from the pressed position to a direction of the bottom of the display of the user terminal, or pointing from the pressed position to the right of the user who holds the user terminal.

204. Control the display page to slide at the page sliding speed along the page sliding direction.

Specifically, after determining the page sliding speed and the page sliding direction, the processor 160 controls the display page to slide at the page sliding speed along the page sliding direction, so as to implement sliding of the display page, thereby facilitating the user in browsing content of the display page. In this embodiment of the present invention, the user needs to enter only the press operation, and when the pressing pressure value is greater than the first preset pressure threshold, may control the user terminal to implement sliding of the sliding display interface, so that operation steps of the user are reduced, and user experience is improved.

Optionally, in a process of sliding the display page, if the user input unit 172 receives a slide operation that is entered by the user, the processor 160 preferentially identifies the slide operation, obtains a sliding speed of the slide operation, and performs fine adjustment on the sliding speed according to the pressing pressure value.

205. If it is detected that the pressing signal is interrupted, control the display page to slide by means of deceleration at a second preset sliding speed along the page sliding direction.

Specifically, in the process of sliding the display page, the user input unit 172 detects whether the pressing signal is interrupted, that is, detects whether a finger of the user or a touch control leaves the display unit 131. Alternatively, by using a pressure touch technology, the processor 160 detects whether the pressing signal is interrupted, that is, detects whether the pressed position of the pressing signal is still located in the first touch area or the second touch area, and if the pressed position is not located in the first touch area or the second touch area in the process of sliding the display page, determines that the pressing signal is interrupted. If the user input unit 172 detects that the pressing signal is interrupted or the processor 160 detects that the pressing signal is interrupted, the processor 160 controls the display page to slide by means of deceleration at the second preset sliding speed. The second preset sliding speed is used for controlling the display page to decelerate, and is determined by a system of the user terminal. A specific value is set by a manufacturer of the user terminal, and is not limited herein.

In this embodiment of the present invention, when the pressing signal that is entered for the sliding display interface is received, the pressing pressure value and the pressing characteristic information of the pressing signal are obtained, where the pressing characteristic information includes the pressed position; the page sliding speed is determined according to the pressing pressure value; the page sliding direction is determined according to the pressed position; and the display page is controlled to slide at the page sliding speed along the page sliding direction, so as to control sliding of the display page according to the pressing pressure value of the pressing signal and the pressed position. The user does not need to enter a slide operation, and needs only a press operation, so that operation steps of the user are reduced, and intelligence of the user terminal is improved.

It should be noted that if the user terminal provides the first touch area and the second touch area, the method in Embodiment 2 of the present invention is executed. If the user terminal does not provide the first touch area or the second touch area, or the pressing pressure value changes in the preset time period, the method in Embodiment 1 of the present invention is executed. If the user terminal provides the first touch area and the second touch area, but the pressed position is neither in the first touch area nor in the second touch area, the method in Embodiment 1 of the present invention is executed.

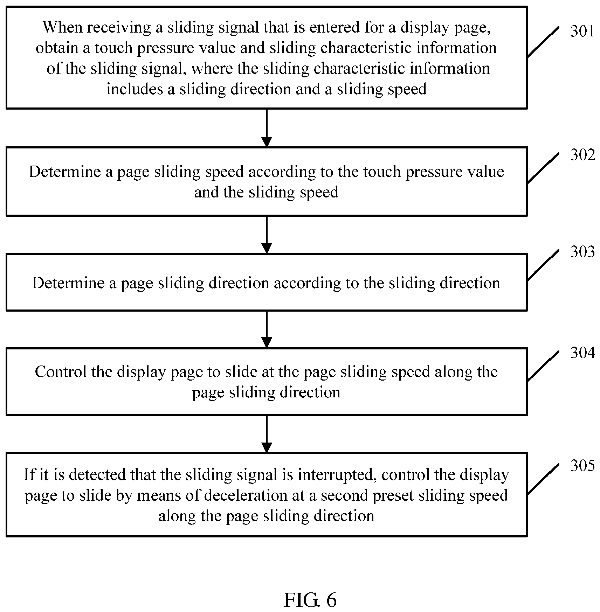

Referring to FIG. 6, FIG. 6 is a schematic flowchart of a page sliding method according to Embodiment 3 of the present invention. The page sliding method that is provided in Embodiment 2 of the present invention and in which the touch signal is a sliding signal is described in detail. With reference to the user terminal shown in FIG. 1, the memory 180 stores a set of program code, and the processor 160 invokes the program code stored in the memory 180, to execute the page sliding method that may include the following step 301 to step 305.

301. When receiving a sliding signal that is entered for a display page, obtain a touch pressure value and sliding characteristic information of the sliding signal, where the sliding characteristic information includes a sliding direction and a sliding speed.

Specifically, when the user input unit 172 receives the sliding signal that is entered for the display page displayed by the display unit 131, the processor 160 obtains the touch pressure value and the sliding characteristic information of the sliding signal by using the user input unit 172, where the sliding characteristic information includes the sliding direction and the sliding speed. The processor 160 invokes the corresponding code in the memory and uses a pressure touch technology to obtain the touch pressure value of the sliding signal. The touch pressure value of the sliding signal is a pressure value of the sliding signal at initial contact with the display unit 131, that is, a pressure value when the user enters a slide operation. A process of obtaining the touch pressure value of the sliding signal is the same as a process of obtaining the pressing pressure value of the pressing signal in Embodiment 1 of the present invention, and details are not described herein. The sliding direction of the sliding signal is a direction of the slide operation that is entered by the user.

302. Determine a page sliding speed according to the touch pressure value and the sliding speed.

Specifically, the processor 160 calculates the page sliding speed according to the touch pressure value of the sliding signal, the sliding speed, and a second calculation formula, and the second calculation formula is as follows:

$$v = v_0 \times f(\mathrm{P}, \mathrm{P}_0),$$

where

$v$ is the page sliding speed, that is, a required page sliding speed; $v_0$ is the sliding speed, that is, a sliding speed of the slide operation that is entered by the user; P is the touch pressure value of the sliding signal; $P_0$ is a second preset pressure threshold, and is a pressure threshold that is preset by a system of the user terminal, and a specific value is not limited herein; and $f$(x,y) is a sliding pressure function, and is a function about a relationship between the sliding pressure value and the second preset pressure threshold, for example, a function about a proportional relationship between the sliding pressure value and the second preset pressure threshold. Specifically, the function is set by a manufacturer of the user terminal, and is not limited herein.

303. Determine a page sliding direction according to the sliding direction.

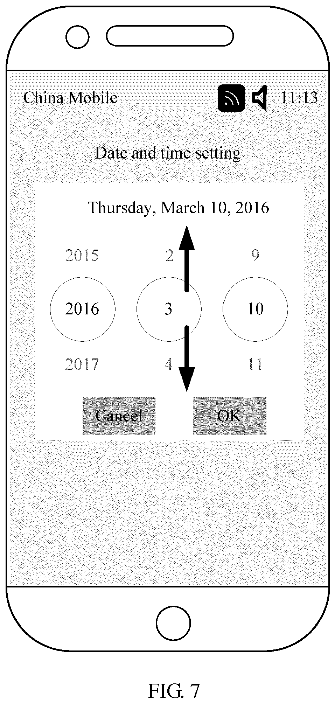

Specifically, the processor 160 determines the page sliding direction according to the sliding direction, and the page sliding direction is the same as the sliding direction. Referring to FIG. 7, FIG. 7 is a schematic interface diagram of a display page according to Embodiment 3 of the present invention. It should be noted that a display page of selecting a date is used an example for description in FIG. 7, another display page and the display page in FIG. 7 differ only in display content, and the page sliding direction is determined in a similar manner. In FIG. 7, a direction to which an arrow points may indicate the sliding direction, that is, the page sliding direction. In an actual implementation process, the arrow in FIG. 7 does not exist.

304. Control the display page to slide at the page sliding speed along the page sliding direction.

Specifically, after determining the page sliding speed and the page sliding direction, the processor 160 controls the display page to slide at the page sliding speed along the page sliding direction, so as to implement sliding of the display page, thereby facilitating the user in browsing content of the display page. In this embodiment of the present invention, the user needs to enter only one slide operation, and does not need to enter the slide operation for multiple times, so that operation steps of the user are reduced, and user experience is improved.

305. If it is detected that the sliding signal is interrupted, control the display page to slide by means of deceleration at a second preset sliding speed along the page sliding direction.

Specifically, in a process of sliding the display page, the user input unit 172 detects whether the sliding signal is interrupted, that is, detects whether a finger of the user or a touch control leaves the display unit 131. Alternatively, by using the pressure touch technology, the processor 160 detects whether the sliding signal is interrupted, that is, detects whether the touch pressure value of the sliding signal changes to zero. If the user input unit 172 detects that the sliding signal is interrupted or the processor 160 detects that the sliding signal is interrupted, the processor 160 controls the display page to slide by means of deceleration at the second preset sliding speed. The second preset sliding speed is used for controlling the display page to decelerate, and is determined by a system of the user terminal. A specific value is set by a manufacturer of the user terminal, and is not limited herein.

In this embodiment of the present invention, when the sliding signal that is entered for the sliding display interface is received, the touch pressure value and the sliding characteristic information of the touch pressure value are obtained, where the sliding characteristic information includes the sliding direction and the sliding speed; the page sliding speed is determined according to the touch pressure value and the sliding speed; the page sliding direction is determined according to the touch characteristic information of the sliding direction; and the display page is controlled to slide at the page sliding speed along the page sliding direction, so as to control sliding of the display page according to the touch pressure value of the sliding signal and the sliding direction. The user does not need to enter the slide operation for multiple times, so that operation steps of the user are reduced, and intelligence of the user terminal is improved.

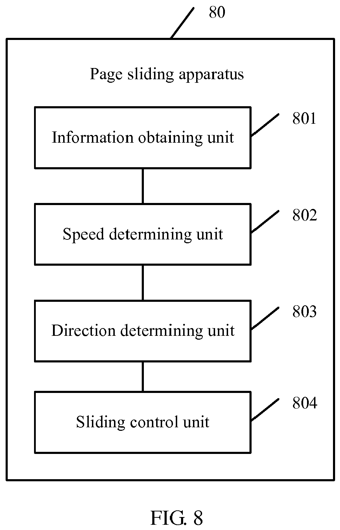

Referring to FIG. 8, FIG. 8 is a schematic structural diagram of a page sliding apparatus according to the present invention. The page sliding apparatus 80 may include: an information obtaining unit 801, a speed determining unit 802, a direction determining unit 803, and a sliding control unit 804.

The information obtaining unit 801 is configured to: when receiving a pressing signal that is entered for a display page, obtain a pressing pressure value and pressing characteristic information of the pressing signal, where the pressing characteristic information includes a pressed position or a change trend of the pressing pressure value.

The speed determining unit 802 is configured to determine a page sliding speed according to the pressing pressure value.

The direction determining unit 803 is configured to determine a page sliding direction according to the pressed position or the change trend of the pressing pressure value.

The sliding control unit 804 is configured to control the display page to slide at the page sliding speed along the page sliding direction.

The speed determining unit 802 includes: a pressure detection unit and a speed calculation unit that are not shown in FIG. 8.

The pressure detection unit is configured to detect whether the pressing pressure value is greater than a first preset pressure threshold.

The speed calculation unit is configured to: if the pressing pressure value is greater than the first preset pressure threshold, calculate the page sliding speed according to the pressing pressure value and a first calculation formula, where

the first calculation formula is: $v = v_0 \times f(P\text{-}P_0)$, where $v$ is the page sliding speed, $v_0$ is a first preset page sliding speed, P is the pressing pressure value, $P_0$ is the first preset pressure threshold, and $f(x)$ is a pressing pressure function.

The direction determining unit 803 is configured to: if the pressed position is located in a first touch area, determine the page sliding direction as a first preset direction. The direction determining unit 803 is further configured to: if the pressed position is located in a second touch area, determine the page sliding direction as a second preset direction.

The first preset direction is opposite to the second preset direction.

The direction determining unit 803 is further configured to: if the change trend of the pressing pressure value is the same as a first preset trend, determine the page sliding direction as a first preset direction.

The direction determining unit 803 is further configured to: if the change trend of the pressing pressure value is the same as a second preset trend, determine the page sliding direction as a second preset direction.

The first preset direction is opposite to the second preset direction.

The sliding control unit is further configured to: if it is detected that the pressing signal is interrupted, control the display page to slide by means of deceleration at a second preset sliding speed along the page sliding direction.

This embodiment of the present invention and the method embodiments shown in FIG. 2 and FIG. 3 derive from a same idea, and technical effects brought by this embodiment of the present invention and the method embodiments are also the same. For a specific principle, refer to the descriptions of the embodiments shown in FIG. 2 and FIG. 3, and details are not described herein again.

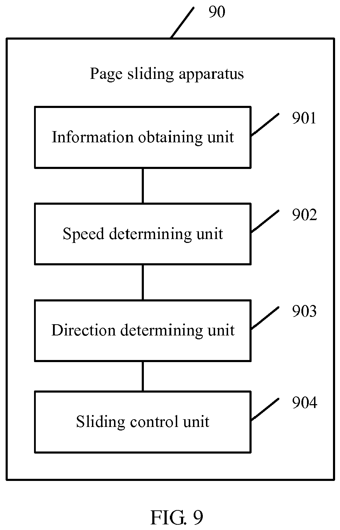

Referring to FIG. 9, FIG. 9 is a schematic structural diagram of another page sliding apparatus according to the present invention. The page sliding apparatus 90 may include: an information obtaining unit 901, a speed determining unit 902, a direction determining unit 903, and a sliding control unit 904.

The information obtaining unit 901 is configured to: when receiving a sliding signal that is entered for a display page, obtain a touch pressure value and sliding characteristic information of the sliding signal, where the sliding characteristic information includes a sliding direction and a sliding speed.

The speed determining unit 902 is configured to determine a page sliding speed according to the touch pressure value and the sliding speed.

The direction determining unit 903 is configured to determine a page sliding direction according to the sliding direction.

The sliding control unit 904 is configured to control the display page to slide at the page sliding speed along the page sliding direction.

The speed determining unit 902 is configured to calculate the page sliding speed according to the touch pressure value, the sliding speed, and a second calculation formula, where

the second calculation formula is: $v = v_0 \times f(P,P_0)$, where $v$ is the page sliding speed, $v_0$ is the sliding speed, P is the touch pressure value, $P_0$ is a second preset pressure threshold, and $f(x,y)$ is a sliding pressure function.

The sliding control unit 904 is further configured to: if it is detected that the sliding signal is interrupted, control the display page to slide by means of deceleration at a second preset sliding speed along the page sliding direction.

This embodiment of the present invention and the method embodiment shown in FIG. 6 derive from a same idea, and technical effects brought by this embodiment of the present invention and the method embodiment are also the same. For a specific principle, refer to the description of the embodiment shown in FIG. 6, and details are not described herein again.

The embodiments of the present invention further provide a computer storage medium, the computer storage medium stores a program, and when the program is executed, the method in Embodiment 1, the method in Embodiment 2, or the method in Embodiment 3 is executed. The embodiments of the present invention further provide a user terminal that includes the page sliding apparatus shown in FIG. 8 and the page sliding apparatus shown in FIG. 9.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also appreciate that all the embodiments described in the specification are examples of embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

A sequence of the steps of the method in the embodiments of the present invention may be adjusted, and certain steps may also be merged or removed according to an actual need.

Merging, division, and removing may be performed on the units of the apparatus in the embodiments of the present invention according to an actual need. A person skilled in the art may combine different embodiments and features of different embodiments described in this specification.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following is taken as an example but is not limited: The computer readable medium may include a random access memory (Random Access Memory, RAM), a read-only memory (Read-Only Memory, ROM), an electrically erasable programmable read-only memory (Electrically Erasable Programmable Read-Only Memory, EEPROM), a compact disc read-only memory (Compact Disc Read-Only Memory, CD-ROM) or other optical disk storage, a disk storage medium or other disk storage, or any other medium that can be used to carry or store expected program code in a command or data structure form and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (Digital Subscriber Line, DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (Disk) and disc (disc) used by the present invention includes a compact disc (CD), a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In conclusion, what is described above is merely examples of embodiments of the technical solutions of the present invention, but is not intended to limit the protection scope of the present invention. Any modification, equivalent replacement, or improvement made without departing from the spirit and principle of the present invention shall fall within the protection scope of the present invention.

## Claims

1. A page sliding method, comprising:

   when receiving a pressing signal that is entered for a display page, obtaining a pressing pressure value and pressing characteristic information of the pressing signal, wherein the pressing characteristic information comprises a pressed position or a change trend of the pressing pressure value;
   determining a page sliding speed according to the pressing pressure value, and determining a page sliding direction according to the pressed position or the change trend of the pressing pressure value; and
   controlling the display page to slide at the page sliding speed along the page sliding direction.

2. The method according to claim 1, wherein the determining a page sliding speed according to the pressing pressure value comprises:

   detecting whether the pressing pressure value is greater than a first preset pressure threshold; and
   if the pressing pressure value is greater than the first preset pressure threshold, calculating the page sliding speed according to the pressing pressure value and a first calculation formula, wherein
   the first calculation formula is: $v = v_0 \times f(P-P_0)$, wherein $v$ is the page sliding speed, $v_0$ is a first preset page sliding speed, P is the pressing pressure value, $P_0$ is the first preset pressure threshold, and $f(x)$ is a pressing pressure function.

3. The method according to claim 1 or 2, wherein the determining a page sliding direction according to the pressed position comprises:

if the pressed position is located in a first touch area, determining the page sliding direction as a first preset direction; and
if the pressed position is located in a second touch area, determining the page sliding direction as a second preset direction, wherein the first preset direction is opposite to the second preset direction.

4. The method according to claim 1 or 2, wherein the determining a page sliding direction according to the change trend of the pressing pressure value comprises:

if the change trend of the pressing pressure value is the same as a first preset trend, determining the page sliding direction as a first preset direction; and
if the change trend of the pressing pressure value is the same as a second preset trend, determining the page sliding direction as a second preset direction, wherein the first preset direction is opposite to the second preset direction.

5. The method according to any one of claims 1 to 4, wherein after the controlling the display page to slide at the page sliding speed along the page sliding direction, the method further comprises:
if it is detected that the pressing signal is interrupted, controlling the display page to slide by means of deceleration at a second preset sliding speed along the page sliding direction.

6. A page sliding method, comprising:

when receiving a sliding signal that is entered for a display page, obtaining a touch pressure value and sliding characteristic information of the sliding signal, wherein the sliding characteristic information comprises a sliding direction and a sliding speed;
determining a page sliding speed according to the touch pressure value and the sliding speed, and determining a page sliding direction according to the sliding direction; and
controlling the display page to slide at the page sliding speed along the page sliding direction.

7. The method according to claim 6, wherein the determining a page sliding speed according to the touch pressure value and the sliding speed comprises:

calculating the page sliding speed according to the touch pressure value, the sliding speed, and a second calculation formula, wherein the second calculation formula is: $v = v_0 \times f(P, P_0)$, wherein $v$ is the page sliding speed, $v_0$ is the sliding speed, P is the touch pressure value, $P_0$ is a second preset pressure threshold, and $f(x,y)$ is a sliding pressure function.

8. The method according to claim 6 or 7, wherein after the controlling the display page to slide at the page sliding speed along the page sliding direction, the method further comprises:
if it is detected that the sliding signal is interrupted, controlling the display page to slide by means of deceleration at a second preset sliding speed along the page sliding direction.

9. A page sliding apparatus, comprising:

an information obtaining unit, configured to: when receiving a pressing signal that is entered for a display page, obtain a pressing pressure value and pressing characteristic information of the pressing signal, wherein the pressing characteristic information comprises a pressed position or a change trend of the pressing pressure value;
a speed determining unit, configured to determine a page sliding speed according to the pressing pressure value;
a direction determining unit, configured to determine a page sliding direction according to the pressed position or the change trend of the pressing pressure value; and
a sliding control unit, configured to control the display page to slide at the page sliding speed along the page sliding direction.

10. The apparatus according to claim 9, wherein the speed determining unit comprises:

a pressure detection unit, configured to detect whether the pressing pressure value is greater than a first preset pressure threshold; and
a speed calculation unit, configured to: if the pressing pressure value is greater than the first preset pressure threshold, calculate the page sliding speed according to the pressing pressure value and a first calculation formula, wherein the first calculation formula is: $v = v_0 \times f(P-P_0)$, wherein $v$ is the page sliding speed, $v_0$ is a first preset page sliding speed, P is the pressing pressure value, $P_0$ is the first preset pressure threshold, and $f(x)$ is a pressing pressure function.

11. The apparatus according to claim 9 or 10, wherein the direction determining unit is configured to: if the pressed position is located in a first touch area, determine the page sliding direction as a first preset direction; and

the direction determining unit is further configured to: if the pressed position is located in a second touch area, determine the page sliding direction as a second preset direction, wherein

the first preset direction is opposite to the second preset direction.

12. The apparatus according to claim 9 or 10, wherein the direction determining unit is further configured to: if the change trend of the pressing pressure value is the same as a first preset trend, determine the page sliding direction as a first preset direction; and the direction determining unit is further configured to: if the change trend of the pressing pressure value is the same as a second preset trend, determine the page sliding direction as a second preset direction, wherein

the first preset direction is opposite to the second preset direction.

13. The apparatus according to any one of claims 9 to 12, wherein the sliding control unit is further configured to: if it is detected that the pressing signal is interrupted, control the display page to slide by means of deceleration at a second preset sliding speed along the page sliding direction.

14. A page sliding apparatus, comprising:

an information obtaining unit, configured to: when receiving a sliding signal that is entered for a display page, obtain a touch pressure value and sliding characteristic information of the sliding signal, wherein the sliding characteristic information comprises a sliding direction and a sliding speed;

a speed determining unit, configured to determine a page sliding speed according to the touch pressure value and the sliding speed;

a direction determining unit, configured to determine a page sliding direction according to the sliding direction; and

a sliding control unit, configured to control the display page to slide at the page sliding speed along the page sliding direction.

15. The apparatus according to claim 14, wherein the speed determining unit is configured to calculate the page sliding speed according to the touch pressure value, the sliding speed, and a second calculation formula; and

the second calculation formula is: $v = v_0 \times f(P, P_0)$, wherein $v$ is the page sliding speed, $v_0$ is the sliding speed, P is the touch pressure value, $P_0$ is a second preset pressure threshold, and $f(x,y)$ is a sliding pressure function.

16. The apparatus according to claim 14 or 15, wherein the sliding control unit is further configured to: if it is detected that the sliding signal is interrupted, control the display page to slide by means of deceleration at a second preset sliding speed along the page sliding direction.

17. A page sliding apparatus, wherein the page sliding apparatus comprises an input module, a memory, and a processor; the memory stores a set of program code, and the processor is configured to invoke the program code stored in the memory, so that the page sliding apparatus executes the method according to any one of claims 1 to 5, or executes the method according to any one of claims 6 to 8.

18. A computer storage medium, wherein the computer storage medium stores a program, and when the program is executed, the step described in any one of claims 1 to 5 or the step described in any one of claims 6 to 8 is performed.

19. A user terminal, comprising the page sliding apparatus according to claims 9 to 17.

FIG. 1

When receiving a pressing signal that is entered for a display page, obtain a pressing pressure value and pressing characteristic information of the pressing signal, where the pressing characteristic information includes a change trend of the pressing pressure value          101

Determine a page sliding speed according to the pressing pressure value          102

Determine a page sliding direction according to the change trend of the pressing pressure value          103

Control the display page to slide at the page sliding speed along the page sliding direction          104

If it is detected that the pressing signal is interrupted, control the display page to slide by means of deceleration at a second preset sliding speed along the page sliding direction          105

FIG. 2

When receiving a pressing signal that is entered for a display page, obtain a pressing pressure value and pressing characteristic information of the pressing signal, where the pressing characteristic information includes a pressed position — 201

Determine a page sliding speed according to the pressing pressure value — 202

Determine a page sliding direction according to the pressed position — 203

Control the display page to slide at the page sliding speed along the page sliding direction — 204

If it is detected that the pressing signal is interrupted, control the display page to slide by means of deceleration at a second preset sliding speed along the page sliding direction — 205

FIG. 3

China Mobile 11:13

Pressing habit setting

Press here

Light press    Hard press

FIG. 4

China Mobile 11:13

Date and time setting

Thursday, March 10, 2016

2015 2 9

51

2016 3 10

2017 4 11

52

Cancel OK

FIG. 5

When receiving a sliding signal that is entered for a display page, obtain a touch pressure value and sliding characteristic information of the sliding signal, where the sliding characteristic information includes a sliding direction and a sliding speed — 301

Determine a page sliding speed according to the touch pressure value and the sliding speed — 302

Determine a page sliding direction according to the sliding direction — 303

Control the display page to slide at the page sliding speed along the page sliding direction — 304

If it is detected that the sliding signal is interrupted, control the display page to slide by means of deceleration at a second preset sliding speed along the page sliding direction — 305

FIG. 6

FIG. 7

80

**Page sliding apparatus**

| Information obtaining unit | 801 |

| Speed determining unit | 802 |

| Direction determining unit | 803 |

| Sliding control unit | 804 |

FIG. 8

90

## Page sliding apparatus

Information obtaining unit — 901

Speed determining unit — 902

Direction determining unit — 903

Sliding control unit — 904

FIG. 9

# INTERNATIONAL SEARCH REPORT

| International application No. |
| --- |
| **PCT/CN2016/074865** |

## A. CLASSIFICATION OF SUBJECT MATTER

G06F 3/0487 (2013.01) i; H04M 1/725 (2006.01) i

According to International Patent Classification (IPC) or to both national classification and IPC

## B. FIELDS SEARCHED

Minimum documentation searched (classification system followed by classification symbols)

G06F; H04M

Documentation searched other than minimum documentation to the extent that such documents are included in the fields searched

Electronic data base consulted during the international search (name of data base and, where practicable, search terms used)

CPRSABS, CNTXT, CNKI, VEN: page, slide, move, press, touch, change, position, orientation, direction,, speed

## C. DOCUMENTS CONSIDERED TO BE RELEVANT

| Category* | Citation of document, with indication, where appropriate, of the relevant passages | Relevant to claim No. |
| --- | --- | --- |
| X | CN 105094643 A (NUBIA TECHNOLOGY CO., LTD.), 25 November 2015 (25.11.2015), description, paragraphs [0070]-[0116] | 1-5, 9-13, 17-19 |
| Y | CN 105094643 A (NUBIA TECHNOLOGY CO., LTD.), 25 November 2015 (25.11.2015), description, paragraphs [0070]-[0116] | 6-8, 14-19 |
| Y | CN 101162420 A (TIANJIN JINKE ELECTRONICS CO., LTD.), 16 April 2008 (16.04.2008), description, pages 2-6 | 6-8, 14-19 |
| Y | US 2013268858 A1 (SAMSUNG ELECTRONICS CO., LTD.), 10 October 2013 (10.10.2013), description, paragraphs [0009]-[0015] | 6-8, 14-19 |
| A | CN 103809891 A (TENCENT TECHNOLOGY (SHENZHEN) CO., LTD.), 21 May 2014 (21.05.2014), the whole document | 1-19 |
| A | US 2014317492 A1 (NAVER BUSINESS PLATFORM CORP.), 23 October 2014 (23.10.2014), the whole document | 1-19 |

☐ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 01 November 2016 (01.11.2016) | **30 November 2016 (30.11.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>          **WANG, Xiaoli**<br><br>Telephone No.: (86-10) **62089545** |

Form PCT/ISA/210 (second sheet) (July 2009)

## INTERNATIONAL SEARCH REPORT
### Information on patent family members

| | International application No. |
|---|---|
| | **PCT/CN2016/074865** |

| Patent Documents referred in the Report | Publication Date | Patent Family | Publication Date |
|---|---|---|---|
| CN 105094643 A | 25 November 2015 | None | |
| CN 101162420 A | 16 April 2008 | CN 101162420 B | 15 December 2010 |
| US 2013268858 A1 | 10 October 2013 | KR 20130115016 A | 21 October 2013 |
| CN 103809891 A | 21 May 2014 | CN 103809891 B | 13 April 2016 |
| | | WO 2014075553 A1 | 22 May 2014 |
| | | US 2015242077 A1 | 27 August 2015 |
| US 2014317492 A1 | 23 October 2014 | KR 20140125995 A | 30 October 2014 |
| | | KR 20150075071 A | 02 July 2015 |
| | | KR 1583006 B1 | 06 January 2016 |
| | | JP 2014216015 A | 17 November 2014 |
| | | JP 5992467 B2 | 14 September 2016 |

Form PCT/ISA/210 (patent family annex) (July 2009)